(19) Europäisches Patentamt
European Patent Office
Office européen des brevets

(11) **EP 4 773 221 A1**

(12) **EUROPEAN PATENT APPLICATION**
published in accordance with Art. 153(4) EPC

(43) Date of publication:
**08.07.2026 Bulletin 2026/28**

(21) Application number: **23955773.9**

(22) Date of filing: **20.10.2023**

(51) International Patent Classification (IPC):
*H01M 4/36* (2006.01)     *H01M 4/505* (2010.01)
*H01M 4/525* (2010.01)

(52) Cooperative Patent Classification (CPC):
**H01M 4/36; H01M 4/505; H01M 4/525;** Y02E 60/10

(86) International application number:
**PCT/CN2023/125571**

(87) International publication number:
**WO 2025/081449 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited Ningde City, Fujian Province 352100 (CN)**

(72) Inventors:
• ZHOU, Juan
  **Ningde, Fujian Province 352100 (CN)**
• LANG, Ye
  **Ningde, Fujian Province 352100 (CN)**
• PENG, Gang
  **Ningde, Fujian Province 352100 (CN)**
• YI, Chengwei
  **Ningde, Fujian Province 352100 (CN)**

(74) Representative: **Kraus & Lederer PartGmbB Thomas-Wimmer-Ring 15 80539 München (DE)**

(54) **ELECTROCHEMICAL DEVICE AND ELECTRONIC DEVICE**

(57) Provided are an electrochemical device and an electronic device. The electrochemical device includes a positive electrode plate. The positive electrode plate includes a positive electrode active material layer, where the positive electrode active material layer includes a first positive electrode active material and a second positive electrode active material. The first positive electrode active material contains element Ni and element Mn, and the second positive electrode active material contains element Ni and element Co. A relationship curve of a capacity-voltage differential dQ/dV with respect to voltage V during discharge of the electrochemical device includes at least two peaks above 3.8 V. The electrochemical device can achieve good cycling performance and safety performance while meeting the demand for high energy density.

FIG. 1

**Description**

## TECHNICAL FIELD

The present application relates to the field of electrochemical energy storage, and specifically to an electrochemical device and an electronic device.

## BACKGROUND

With the development of electrochemical energy storage technology, increasingly higher requirements have been placed on the energy density and safety performance of electrochemical devices (for example, lithium-ion batteries). For instance, as the market for power batteries demands longer driving ranges, high-nickel ternary materials with high energy density have gradually become a focus of development. However, as the nickel content increases, the thermal stability of ternary materials decreases, leading to reduced safety of high-nickel ternary materials, which limits widespread application of high-nickel ternary materials.

## SUMMARY

In view of this, the present application provides an electrochemical device and an electronic device to enhance the safety performance of the electrochemical device while meeting the demand for high energy density of the electrochemical device.

According to a first aspect of the present application, an electrochemical device is provided, where the electrochemical device includes a positive electrode plate. The positive electrode plate includes a positive electrode active material layer, where the positive electrode active material layer includes a first positive electrode active material and a second positive electrode active material. The first positive electrode active material contains element Ni and element Mn, and the second positive electrode active material contains element Ni and element Co. A relationship curve of a capacity-voltage differential dQ/dV with respect to voltage V during discharge of the electrochemical device includes at least two peaks above 3.8 V. In the electrochemical device of the present application, the first positive electrode active material, relative to the second positive electrode active material, exhibits a characteristic peak in a high-voltage region of the relationship curve of the capacity-voltage differential dQ/dV with respect to voltage V during discharge of the electrochemical device, enabling the electrochemical device to have a higher reversible discharge capacity in the high-voltage region, thereby meeting the demand for high energy density of the electrochemical device. Meanwhile, due to the higher lithium extraction amount of the first positive electrode active material in the high-voltage region, the risk of excessive lithium extraction from the second positive electrode active material can be reduced, thereby enhancing the structural stability of the second positive electrode active material at high temperatures and high voltages. Additionally, the presence of oxygen vacancies on the surface of the first positive electrode active material can suppress surface oxygen release, maintaining high structural stability at high temperatures and high voltages, thereby significantly improving the cycling performance and safety performance of the electrochemical device.

In some embodiments, the relationship curve of the capacity-voltage differential dQ/dV with respect to voltage V during discharge of the electrochemical device includes a peak A and a peak B above 3.8 V, where a peak position of the peak A is in a range of 3.8 V to 4.1 V, a peak position of the peak B is in a range of 4.1 V to 4.3 V, a peak area of the peak A is $S_A$, and a peak area of the peak B is $S_B$, satisfying: $0.5 \leq S_B/S_A \leq 1$. The peak A is primarily determined by the second positive electrode active material, and the peak B is primarily determined by the first positive electrode active material. By adjusting a relative content of the first positive electrode active material and the second positive electrode active material to make the peak A and peak B satisfy $0.5 \leq S_B/S_A \leq 1$, the electrochemical device can achieve both excellent cycling performance and safety performance. Further, in some embodiments, $0.5 \leq S_B/S_A \leq 0.85$.

In some embodiments, the relationship curve of the capacity-voltage differential dQ/dV with respect to voltage V during discharge of the electrochemical device further includes a peak C in a range of 3.5 V to 3.7 V. The presence of the peak C can further enable the electrochemical device to have a higher discharge capacity, thereby further enhancing the energy density of the electrochemical device.

In some embodiments, the relationship curve of the capacity-voltage differential dQ/dV with respect to voltage V during discharge of the electrochemical device includes at least one peak above 4.1 V. This can indicate that the first positive electrode active material has good reversible capacity in the high-voltage region, thereby enhancing the cycling performance and safety performance of the electrochemical device.

In some embodiments, when the electrochemical device is in a fully discharged state, an X-ray diffraction characterization of the positive electrode plate has a diffraction peak 1 in a range of 43.7° to 44.1°, a peak intensity of the diffraction peak 1 being $P_1$, and has a diffraction peak 2 in a range of 44.2° to 44.6°, a peak intensity of the diffraction peak 2 being $P_2$, satisfying: $1 \leq P_2/P_1 \leq 6.5$. The diffraction peak 1 corresponds to the first positive electrode active material, and the diffraction peak 2 corresponds to the second positive electrode active material. When $P_2/P_1$ satisfies the above range, the electrochemical device can achieve both excellent cycling performance and safety performance. Further, in some embodiments, $2.3 \leq P_2/P_1 \leq 6.5$.

In some embodiments, the first positive electrode active material further contains element M1, where the element M1 includes at least one of Na or K. Based on metal elements in the first positive electrode active material excluding element Li and the element M1, a molar percentage of the element Ni in the first positive electrode active material is a1, a molar percentage of the element Mn is b1, and a molar percentage of the element M1 is c1, satisfying: $30\% \leq a1 \leq 70\%$, $30\% \leq b1 \leq 70\%$, and $0.1\% \leq c1 \leq 15\%$. The doping of the element M1 enables the first positive electrode active material to have good structural stability at high temperatures and high voltages, thereby enhancing the cycling performance and safety performance of the electrochemical device.

In some embodiments, the second positive electrode active material further contains element M2, where the element M2 includes at least one of Mn or Al. Based on metal elements in the second positive electrode active material excluding element Li, a molar percentage of the element Ni in the second positive electrode active material is a2, a molar percentage of the element Co is b2, and a molar percentage of the element M2 is c2, satisfying: $80\% \leq a2 \leq 98\%$, $1\% \leq b2 \leq 19\%$, and $1\% \leq c2 \leq 19\%$. The presence of the element M2 can enhance the structural stability of the second positive electrode active material at high temperatures and high voltages, thereby improving the cycling performance and safety performance of the electrochemical device.

In some embodiments, the first positive electrode active material is secondary particles formed by aggregation of primary particles. This can enhance the kinetic performance of the electrochemical device.

In some embodiments, an average diameter of the first positive electrode active material is 6 $\mu$m to 14 $\mu$m.

In some embodiments, the second positive electrode active material is primary particles. This can enhance the structural stability of the second positive electrode active material at high temperatures and high voltages, thereby improving the cycling performance and safety performance of the electrochemical device.

In some embodiments, an average diameter of the second positive electrode active material is 3 $\mu$m to 10 $\mu$m.

In some embodiments, in a cross-section along a thickness direction of the positive electrode active material layer, in a 127 $\mu$m $\times$ 34 $\mu$m region, an area of the first positive electrode active material is $S_1$, and an area of the second positive electrode active material is $S_2$, satisfying: $0.5 \leq S_2/S_1 \leq 1.5$. When $S_2/S_1$ satisfies the above range, the electrochemical device can achieve both excellent cycling performance and safety performance. Further, in some embodiments, $0.7 \leq S_2/S_1 \leq 1.3$.

In some embodiments, the first positive electrode active material has a layered crystal structure belonging to an R-3m space group. In some embodiments, the first positive electrode active material includes $Li_{x1}M1_mNi_{y1}Mn_{z1}R1_{q1}O_{2 \pm n1}T1_{n1}$, where $0.6 \leq x1 \leq 1.2$, $0.001 \leq m \leq 0.15$, $0.3 \leq y1 \leq 0.7$, $0.3 \leq z1 \leq 0.7$, $0 \leq q1 \leq 0.2$, $0 \leq n1 \leq 0.2$, element M1 includes at least one of Na or K, element R1 includes at least one of Co, Ca, Sr, Y, Zr, Nb, Mo, In, Sn, Sb, Ba, La, Ce, Hf, Ta, W, Pb, Al, Mg, B, Si, P, S, Ti, V, Cr, Fe, Cu, Zn, Ga, or Ge, and element T1 includes at least one of F, Cl, Br, I, or N.

In some embodiments, the second positive electrode active material has a layered crystal structure belonging to an R-3m space group. In some embodiments, the second positive electrode active material includes $Li_{x2}Ni_{y2}Co_{z2}M2_pR2_{q2}O_{2 \pm n2}T2_{n2}$, where $0.6 \leq x2 \leq 1.2$, $0.8 \leq y2 \leq 0.98$, $0.01 \leq z2 \leq 0.19$, $0.01 \leq p \leq 0.19$, $0 \leq q2 \leq 0.1$, $0 \leq n2 \leq 0.2$, element M2 includes at least one of Mn or Al, element R2 includes at least one of Ca, Sr, Y, Zr, Nb, Mo, In, Sn, Sb, Ba, La, Ce, Hf, Ta, W, Pb, Na, K, Mg, B, Si, P, S, Ti, V, Cr, Fe, Cu, Zn, Ga, or Ge, and element T2 includes at least one of F, Cl, Br, I, or N.

According to a second aspect of the present application, an electronic device is further provided, including the electrochemical device described above.

## BRIEF DESCRIPTION OF DRAWINGS

To more clearly illustrate the technical solutions in the embodiments of the present application, a brief introduction to the drawings used in the description of the embodiments is provided below. It is apparent that the drawings described below are only some embodiments of the present application, and other embodiments may be obtained by those skilled in the art based on these drawings.

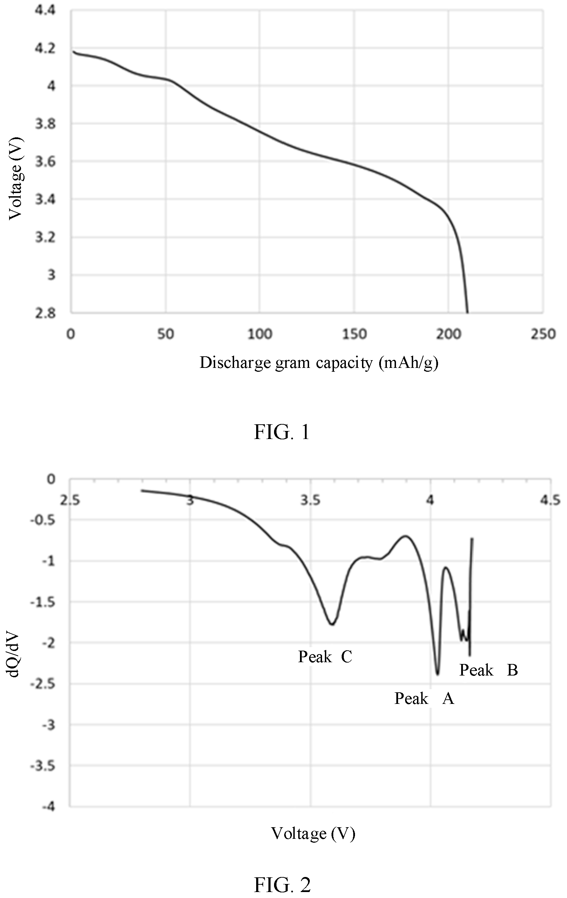

FIG. 1 shows a discharge curve of an electrochemical device according to Example 1 of the present application.
FIG. 2 shows a relationship curve of a capacity-voltage differential dQ/dV with respect to voltage V during discharge of the electrochemical device according to Example 1 of the present application.

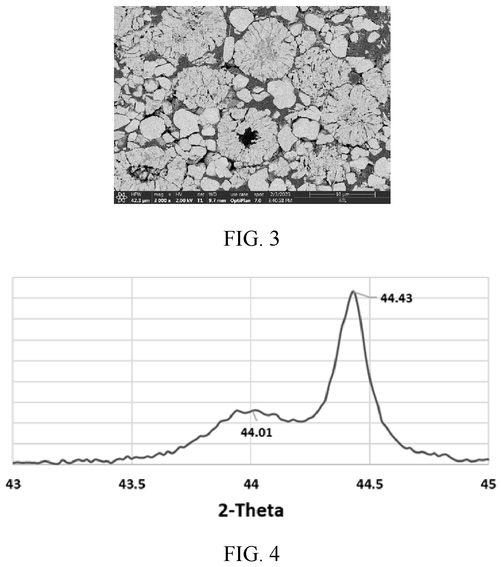

FIG. 3 shows a scanning electron microscope (SEM) photograph of a cross-section of a positive electrode plate according to Example 1 of the present application.
FIG. 4 shows an X-ray diffraction (XRD) pattern of the positive electrode plate when the electrochemical device according to Example 1 of the present application is in a fully discharged state.

## DESCRIPTION OF EMBODIMENTS

The following description, in conjunction with the drawings of the embodiments of the present application, clearly and completely describes the technical solutions in the embodiments of the present application. It is apparent that the described embodiments are only a part of the embodiments of the present application, not all embodiments.

According to a first aspect of the present application, an electrochemical device is provided. The electrochemical device includes a positive electrode plate. The positive electrode plate includes a positive electrode active material layer. The positive electrode active material layer includes a first positive electrode active material and a second positive electrode active material. The first positive electrode active material contains element Ni and element Mn, and the second positive electrode active material contains element Ni and element Co. A relationship curve of a capacity-voltage differential dQ/dV with respect to voltage V during discharge of the electrochemical device includes at least two peaks above 3.8 V.

In the electrochemical device of the present application, the first positive electrode active material, relative to the second positive electrode active material, exhibits a characteristic peak in a high-voltage region of the relationship curve of the capacity-voltage differential dQ/dV with respect to voltage V during discharge of the electrochemical device, enabling the electrochemical device to have a higher reversible discharge capacity in the high-voltage region, thereby meeting the demand for high energy density of the electrochemical device. Meanwhile, due to the higher lithium extraction amount of the first positive electrode active material in the high-voltage region, the risk of excessive lithium extraction from the second positive electrode active material can be reduced, thereby enhancing the structural stability of the second positive electrode active material at high temperatures and high voltages. Additionally, the presence of oxygen vacancies on the surface of the first positive electrode active material can suppress surface oxygen release, maintaining high structural stability at high temperatures and high voltages, thereby significantly improving the cycling performance and safety performance of the electrochemical device.

In some embodiments, the relationship curve of the capacity-voltage differential dQ/dV with respect to voltage V during discharge of the electrochemical device includes a peak A and a peak B above 3.8 V, where a peak position of the peak A is in a range of 3.8 V to 4.1 V, a peak position of the peak B is in a range of 4.1 V to 4.3 V, a peak area of the peak A is $S_A$, and a peak area of the peak B is $S_B$, satisfying: $0.5 \leq S_B/S_A \leq 1$. The peak A is primarily determined by the second positive electrode active material, and the peak B is primarily determined by the first positive electrode active material. The ratio $S_B/S_A$ can be used to indirectly characterize a mixing ratio of the first positive electrode active material and the second positive electrode active material. By adjusting a relative content of the first positive electrode active material and the second positive electrode active material to make the peak A and peak B satisfy $0.5 \leq S_B/S_A \leq 1$, the electrochemical device can achieve both excellent cycling performance and safety performance. Optionally, $S_B/S_A$ is 0.5, 0.55, 0.6, 0.65, 0.7, 0.75, 0.8, 0.85, 0.9, 0.95, 1, or a range formed by any two of the above values. Further, in some embodiments, $0.5 \leq S_B/S_A \leq 0.85$.

In some embodiments, the relationship curve of the capacity-voltage differential dQ/dV with respect to voltage V during discharge of the electrochemical device further includes a peak C in a range of 3.5 V to 3.7 V. The presence of the peak C can further enable the electrochemical device to have a higher discharge capacity, thereby further enhancing the energy density of the electrochemical device.

In some embodiments, the relationship curve of the capacity-voltage differential dQ/dV with respect to voltage V during discharge of the electrochemical device includes at least one peak above 4.1 V. This can indicate that the first positive electrode active material has good reversible capacity in the high-voltage region, thereby enhancing the cycling performance and safety performance of the electrochemical device.

In some embodiments, when the electrochemical device is in a fully discharged state, an X-ray diffraction characterization of the positive electrode plate has a diffraction peak 1 in a range of 43.7° to 44.1°, a peak intensity of the diffraction peak 1 being $P_1$, and has a diffraction peak 2 in a range of 44.2° to 44.6°, a peak intensity of the diffraction peak 2 being $P_2$, satisfying: $1 \leq P_2/P_1 \leq 6.5$. The diffraction peak 1 corresponds to the first positive electrode active material, and the diffraction peak 2 corresponds to the second positive electrode active material. When $P_2/P_1$ satisfies the above range, the electrochemical device can achieve both excellent cycling performance and safety performance. Optionally, $P_2/P_1$ is 1, 1.5, 2, 2.5, 3, 3.5, 4, 4.5, 5, 5.5, 6, 6.5, or a range formed by any two of the above values. Further, in some embodiments, $2.3 \leq P_2/P_1 \leq 6.5$. In this case, the cycling performance and safety performance of the electrochemical device are further improved.

In some embodiments, the first positive electrode active material further contains element M1, where element M1 includes at least one of Na or K. The doping of the element M1 enables the first positive electrode active material to have good structural stability at high temperatures and high voltages, thereby enhancing the cycling performance and safety performance of the electrochemical device.

In some embodiments, element M1 is doped in a lithium layer. This can better stabilize a crystal structure of the first positive electrode active material in a high lithium extraction state, thereby enhancing the cycling performance and safety performance of the electrochemical device.

In some embodiments, based on metal elements in the first positive electrode active material excluding element Li and element M1, a molar percentage of the element Ni in the first positive electrode active material is a1, a molar percentage of the element Mn is b1, and a molar percentage of the element M1 is c1, satisfying: $30\% \leq a1 \leq 70\%$, $30\% \leq b1 \leq 70\%$, and $0.1\% \leq c1 \leq 15\%$.

In some embodiments, the second positive electrode active material further contains element M2, where the element M2 includes at least one of Mn or Al. Based on metal elements in the second positive electrode active material excluding element Li, a molar percentage of the element Ni in the second positive electrode active material is a2, a molar percentage of the element Co is b2, a molar percentage of the element M2 is c2, satisfying: $80\% \leq a2 \leq 98\%$, $1\% \leq b2 \leq 19\%$, $1\% \leq c2 \leq 19\%$. The presence of the element M2 can enhance the structural stability of the second positive electrode active material at high temperatures and high voltages, thereby improving the cycling performance and safety performance of the electrochemical device.

In some embodiments, the first positive electrode active material is secondary particles formed by aggregation of primary particles. This can enhance the kinetic performance of the electrochemical device.

In some embodiments, an average diameter of the first positive electrode active material is 6 $\mu$m to 14 $\mu$m.

In some embodiments, the second positive electrode active material is primary particles. This can enhance the structural stability of the second positive electrode active material at high temperatures and high voltages, thereby improving the cycling performance and safety performance of the electrochemical device.

In some embodiments, an average diameter of the second positive electrode active material is 3 $\mu$m to 10 $\mu$m.

In some embodiments, in a cross-section along a thickness direction of the positive electrode active material layer, in a 127 $\mu$m $\times$ 34 $\mu$m region, an area of the first positive electrode active material is $S_1$, and an area of the second positive electrode active material is $S_2$, satisfying: $0.5 \leq S_2/S_1 \leq 1.5$. This can enable the electrochemical device to achieve both excellent cycling performance and safety performance. Optionally, $S_2/S_1$ is 0.5, 0.6, 0.7, 0.8, 0.9, 1, 1.1, 1.2, 1.3, 1.4, 1.5, or a range formed by any two of the above values. Further, in some embodiments, $0.7 \leq S_2/S_1 \leq 1.3$. In this case, the cycling performance and safety performance of the electrochemical device are further improved.

In some embodiments, the first positive electrode active material has a layered crystal structure belonging to an R-3m space group. In some embodiments, the first positive electrode active material includes $Li_{x1}M1_mNi_{y1}Mn_{z1}R1_{q1}O_{2\pm n1}T1_{n1}$, where $0.6 \leq x1 \leq 1.2$, $0.001 \leq m \leq 0.15$, $0.3 \leq y1 \leq 0.7$, $0.3 \leq z1 \leq 0.7$, $0 \leq q1 \leq 0.2$, $0 \leq n1 \leq 0.2$, element M1 includes at least one of Na or K, element R1 includes at least one of Co, Ca, Sr, Y, Zr, Nb, Mo, In, Sn, Sb, Ba, La, Ce, Hf, Ta, W, Pb, Al, Mg, B, Si, P, S, Ti, V, Cr, Fe, Cu, Zn, Ga, or Ge, and element T1 includes at least one of F, Cl, Br, I, or N.

In some embodiments, the second positive electrode active material has a layered crystal structure belonging to an R-3m space group. In some embodiments, the second positive electrode active material includes $Li_{x2}Ni_{y2}Co_{z2}M2_pR2_{q2}O_{2\pm n2}T2_{n2}$, where $0.6 \leq x2 \leq 1.2$, $0.8 \leq y2 \leq 0.98$, $0.01 \leq z2 \leq 0.19$, $0.01 \leq p \leq 0.19$, $0 \leq q2 \leq 0.1$, $0 \leq n2 \leq 0.2$, element M2 includes at least one of Mn or Al, element R2 includes at least one of Ca, Sr, Y, Zr, Nb, Mo, In, Sn, Sb, Ba, La, Ce, Hf, Ta, W, Pb, Na, K, Mg, B, Si, P, S, Ti, V, Cr, Fe, Cu, Zn, Ga, or Ge, and element T2 includes at least one of F, Cl, Br, I, or N.

In some embodiments, the positive electrode plate may further include a positive electrode current collector, where the positive electrode active material layer can be disposed on one side or two sides of the positive electrode current collector. In some embodiments, the positive electrode current collector may include aluminum foil. Certainly, other positive electrode current collectors commonly used in the art may also be used. In some embodiments, a thickness of the positive electrode current collector is 7 $\mu$m to 20 $\mu$m.

In some embodiments, the positive electrode active material layer may further include a conductive agent and a binder. In some embodiments, the conductive agent includes at least one of conductive carbon black, acetylene black, Ketjen black, carbon nanotubes, graphene, or carbon nanofibers. In some embodiments, the binder includes at least one of polyvinylidene fluoride, a copolymer of vinylidene fluoride-hexafluoropropylene, a styrene-acrylate copolymer, polyamide, polyacrylonitrile, an acrylate polymer, polyacrylic acid, a polyacrylate, sodium carboxymethyl cellulose, polyvinyl acetate, polyvinylpyrrolidone, polyvinyl ether, polytetrafluoroethylene, or polyhexafluoropropylene. In some embodiments, a mass ratio of the positive electrode active material, the conductive agent, and the binder in the positive electrode active material layer is (90-99):(0.1-10):(0.1-10). This is merely an example, and any other suitable mass ratio may be used.

In some embodiments, the electrochemical device further includes a negative electrode plate and a separator, where the positive electrode plate and the negative electrode plate are separated by the separator disposed therebetween. In some embodiments, the negative electrode plate includes a negative electrode current collector and a negative electrode active material layer. In some embodiments, the negative electrode active material layer may be disposed on one side or two sides of the negative electrode current collector.

In some embodiments, the negative electrode active material layer may include a negative electrode active material, a binder, and optionally a conductive agent. In some embodiments, the negative electrode active material may include at least one of a carbon material or a silicon-based material. In some embodiments, the carbon material includes at least one of graphite, hard carbon, soft carbon, or mesocarbon microbeads. In some embodiments, the silicon-based material includes at least one of silicon, a silicon-oxygen material, a silicon-carbon material, or a silicon-oxygen-carbon material.

In some embodiments, the binder in the negative electrode active material layer may include at least one of sodium carboxymethyl cellulose (CMC), polyacrylic acid, a polyacrylate, polyvinylpyrrolidone, polyimide, polysiloxane, styrene-butadiene rubber, polyurethane resin, or an acrylate polymer. In some embodiments, the conductive agent in the negative electrode active material layer may include at least one of conductive carbon black, acetylene black, Ketjen black, carbon nanotubes, graphene, or carbon nanofibers. In some embodiments, a mass ratio of the negative electrode active material, the conductive agent, and the binder in the negative electrode active material layer may be (78 to 98.5):(0.1 to 10):(0.1 to 10). It should be understood that the above is merely an example, and any other suitable materials and mass ratios may be used. In some embodiments, the negative electrode current collector may include at least one of copper foil, nickel foil, or a carbon-based current collector.

In some embodiments, the separator includes a porous substrate layer and a heat-resistant layer. In some embodiments, the porous substrate layer includes at least one of polyethylene, polypropylene, polyethylene terephthalate, polyimide, or aramid. In some embodiments, a thickness of the separator is in a range of 3 $\mu$m to 20 $\mu$m. In some embodiments, pores of the porous substrate layer have a diameter in a range of 0.01 $\mu$m to 1 $\mu$m.

In some embodiments, the heat-resistant layer includes inorganic particles and a binder, where the inorganic particles are selected from at least one of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), cerium dioxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. The binder of the heat-resistant layer is selected from at least one of polyvinylidene fluoride, a copolymer of vinylidene fluoride-hexafluoropropylene, polyamide, polyacrylonitrile, an acrylate polymer, polyacrylic acid, a polyacrylate, sodium carboxymethyl cellulose, polyvinylpyrrolidone, polyvinyl ether, polytetrafluoroethylene, or polyhexafluoropropylene.

In some embodiments, the electrochemical device includes a lithium-ion battery, but the present application is not limited thereto.

In some embodiments, the electrochemical device further includes an electrolyte, where the electrolyte includes a lithium salt and a non-aqueous solvent. In some embodiments, the lithium salt includes lithium hexafluorophosphate. In some embodiments, a concentration of the lithium salt is 1 mol/L to 2 mol/L. In some embodiments, the non-aqueous solvent includes a carbonate compound, a carboxylate compound, an ether compound, or a combination thereof.

In some embodiments, the carbonate compound may be a linear carbonate compound, a cyclic carbonate compound, or a combination thereof. Examples of the linear carbonate compound are diethyl carbonate (DEC), dimethyl carbonate (DMC), dipropyl carbonate (DPC), methyl propyl carbonate (MPC), ethyl propyl carbonate (EPC), methyl ethyl carbonate (MEC), or a combination thereof. Examples of the cyclic carbonate compound include ethylene carbonate (EC), propylene carbonate (PC), butylene carbonate (BC), or a combination thereof. Examples of the carboxylate compound are methyl acetate, ethyl acetate, n-propyl acetate, tert-butyl acetate, methyl propionate, ethyl propionate, propyl propionate, $\gamma$-butyrolactone, caprolactone, valerolactone, hexanolactone, methyl formate, or a combination thereof. Examples of the ether compound are dibutyl ether, tetraglyme, diglyme, 1,2-dimethoxyethane, 1,2-diethoxyethane, ethoxymethoxyethane, 2-methyltetrahydrofuran, tetrahydrofuran, or a combination thereof.

According to a second aspect of the present application, an electronic device including the electrochemical device described above is further provided. The electronic device of the embodiments of the present application is not particularly limited and may be any electronic device known in the prior art. In some embodiments, the electronic device may include, but is not limited to, a notebook computer, a pen-input computer, a mobile computer, an e-book reader, a portable phone, a portable fax machine, a portable copier, a portable printer, a stereo headset, a video recorder, an LCD television, a handheld cleaner, a portable CD player, a mini-disc player, a transceiver, an electronic organizer, a calculator, a memory card, a portable recorder, a radio, a backup power supply, a motor, an automobile, a motorcycle, a power-assisted bicycle, a bicycle, a drone, a lighting appliance, a toy, a gaming console, a clock, a power tool, a flashlight, a camera, a large household battery, or a lithium-ion capacitor.

The following takes a lithium-ion battery as an example to provide specific examples and comparative examples to better illustrate the present application.

Example 1

Preparation of negative electrode plate: Artificial graphite, styrene-butadiene rubber, and sodium carboxymethyl cellulose were mixed at a mass ratio of 96:2:2 and dispersed in deionized water to prepare a negative electrode slurry with a solid content of 0.8. After thorough stirring, the negative electrode slurry was uniformly applied on one side surface of a copper foil negative electrode current collector and dried at 80°C, to obtain a negative electrode plate with a negative electrode active material layer applied on one surface. The above steps were repeated on the other side surface of the copper foil, to obtain a negative electrode plate with a negative electrode active material layer applied on two surfaces. After cold pressing, slitting, and welding tabs, a negative electrode plate was obtained.

Preparation of positive electrode plate: A positive electrode active material (including a first positive electrode active material and a second positive electrode active material, with a mixing mass ratio as shown in Table 1), conductive carbon black, carbon nanotubes, and polyvinylidene fluoride were mixed at a mass ratio of 93.7:2.8:1.2:2.3 and dispersed in N-methylpyrrolidone, to prepare a positive electrode slurry with a solid content of 0.7. After thorough stirring and mixing, the positive electrode slurry was uniformly applied on one side surface of an aluminum foil positive electrode current collector and dried at 85°C, to obtain a positive electrode plate with a positive electrode active material layer applied on one surface. The above steps were repeated on the other side surface of the aluminum foil, to obtain a positive electrode plate with a positive electrode active material layer applied on two surfaces. After cold pressing, slitting, and welding tabs, a positive electrode plate was obtained.

The preparation steps for the first positive electrode active material are as follows:

(1) A mixed solution containing $NiSO_4$ and $MnSO_4$ was prepared with a molar ratio of Ni:Mn = 50:50, and was reacted with a precipitant (NaOH solution) and a complexing agent (ammonia water), with a reaction time of 60 hours, an ammonia concentration of 1 mol/L, and a pH value of 12.2, to obtain a nickel-manganese precursor $TM(OH)_2$ (TM = Ni/Mn) with an average particle size $D_v50$ of 11 $\mu$m.

(2) The nickel-manganese precursor and sodium carbonate were ground and mixed uniformly at a molar ratio of Na:(Ni+Mn) = 1.05:1. The mixture was calcined at 800°C in an air atmosphere for 20 h, followed by crushing, sieving, and demagnetization to obtain a product 1.

(3) The product 1 was mixed with a mixture of lithium hydroxide and lithium nitrate (with a molar ratio of 1:1), with a mass ratio of the lithium hydroxide and lithium nitrate mixture to the product 1 being 10:1. The temperature was raised to 400°C at a speed of 10°C/min, and held for 6 hours. Then, the mixture was quenched to room temperature at a temperature drop speed of 50°C/min in a mixed gas of Ar and air (volume ratio of Ar to air being 1:2) to obtain a product 2.

(4) The product 2 was washed and soaked in deionized water and dried.

(5) Finally, after crushing and sieving, the first positive electrode active material was obtained, with a Na/(Ni+Mn) molar ratio of 10.7% and a $D_v50$ of 9.4 $\mu$m.

The second positive electrode active material was a single-crystal high-nickel ternary material $LiNi_{0.9}Co_{0.06}Mn_{0.04}O_2$ with a $D_v50$ of 4.8 $\mu$m.

Preparation of separator: An 8 $\mu$m thick porous polyethylene (PE) film was used as the separator.

Preparation of electrolyte: In a glovebox with an argon atmosphere having a water content of less than 10 ppm, lithium hexafluorophosphate was mixed uniformly with a non-aqueous organic solvent (ethylene carbonate (EC):propylene carbonate (PC):diethyl carbonate (DEC):propyl propionate (PP):ethyl propionate (EP) = 1:1:1:1:1, by weight) to prepare an electrolyte, where a mass percentage of lithium hexafluorophosphate in the electrolyte was 12.5%.

Preparation of lithium-ion battery: The positive electrode plate, separator, and negative electrode plate were stacked in order, with the separator positioned between the positive electrode plate and the negative electrode plate for separation, and then wound to obtain an electrode assembly. The electrode assembly was placed in an aluminum-plastic film outer packaging, and dried at 80°C to remove moisture. The above electrolyte was injected, followed by sealing. After formation, degassing, shaping, and other processes, a lithium-ion battery was obtained.

Examples 2 to 13 differed from Example 1 in that the composition of the positive electrode active material was adjusted according to the mixing mass ratio of the first positive electrode active material and the second positive electrode active material as shown in Table 1.

Comparative Example 1 differed from Example 1 in that the positive electrode active material only included the first positive electrode active material.

Comparative Example 2 differed from Example 1 in that the positive electrode active material only included the second positive electrode active material.

In addition, in the present application, the following methods were used to measure the corresponding parameters.

(1) Peak area:

Within a voltage range of 2.8 V to 4.35 V, the lithium-ion battery was charged and discharged at a current of 0.1C to obtain a relationship curve of the capacity-voltage differential dQ/dV with respect to voltage V during discharge. The peak areas of the respective peaks in the curve were obtained by integration of the peaks. For two partially overlapping peaks, the division was made at the inflection point connecting the two peaks.

(2) Particle morphology, average diameter, and area ratio $S_2/S_1$:

The positive electrode plate was cut longitudinally using ion polishing, and the morphology of the positive electrode active material particles in the cross-section of the positive electrode plate was observed using a scanning electron microscope (model: ZEISS SEM, acceleration voltage: 0.1 kV to 30 kV). In the cross-sectional photograph, 50 particles of the first or second positive electrode active material were randomly selected, and the average value of their longest diameters was taken as the average diameter of the first or second positive electrode active material. In the cross-sectional photograph, a 127 $\mu$m $\times$ 34 $\mu$m region was randomly selected, and image software was used to calculate the area of the first positive electrode active material as $S_1$ and the area of the second positive electrode active material as $S_2$, thereby calculating the area ratio $S_2/S_1$.

(3) Element content:

For the initial positive electrode active material, a mixed solvent was used to dissolve the first and second positive electrode active materials separately (for example, a mixed solution of 10 mL of aqua regia (nitric acid and hydrochloric acid mixed at a 1:1 ratio) and 2 mL of HF was used for 0.4 g of positive electrode active material), and the solution was diluted to 100 mL. Then, the content of each element in the solution was tested using an ICP analyzer.

For the first positive electrode active material and second positive electrode active material in the positive electrode plate, the positive electrode plate was cut longitudinally using ion polishing, and the cross-section of the positive electrode plate was observed using a scanning electron microscope (model: ZEISS SEM). An energy dispersive spectrometer (EDS) was used to test the first and second positive electrode active materials separately to determine the element content in the first positive electrode active material and second positive electrode active material.

(4) X-ray diffraction:

The lithium-ion battery was fully discharged, and disassembled to obtain the positive electrode plate. X-ray diffraction analysis was performed on the positive electrode plate using an X-ray diffractometer (model: Bruker D8 ADVANCE, target: Cu K$\alpha$, scanning angle: 5° to 80°).

(5) Test for discharge gram capacity:

The lithium-ion battery was tested at a constant temperature of 25°C. It was first charged at a constant current of 0.5C until the voltage reached 4.35 V, and then charged at a constant voltage until the current reached 0.05C, followed by constant current discharge at 0.2C until the voltage reached 2.8 V. Discharge gram capacity = discharge capacity at 0.2C/mass of positive electrode active material.

(6) Cycling performance test:

First, in an environment of 45°C, the first charge and discharge cycle was performed. The battery was charged at a constant current of 0.5C until the voltage reached 4.35 V, and then charged at a constant voltage until the current reached 0.05C, followed by constant current discharge at 0.5C until the voltage reached 2.8 V. The above charge-discharge cycle was repeated, and the discharge capacities of the 3rd cycle and the 500th cycle were recorded.

Capacity retention rate at 45°C = (discharge capacity of 500th cycle/discharge capacity of 3rd cycle) $\times$ 100%.

(7) Nail penetration pass rate:

The lithium-ion battery was charged at a constant rate of 0.5C until the voltage reached 4.35 V, and then charged at a constant voltage of 4.35 V until the current reached 0.05C, bringing the lithium-ion battery to a fully charged state. The appearance of the lithium-ion battery before testing was recorded. A nail penetration test was conducted in an environment of 25 $\pm$ 3°C by using a steel nail with a diameter of 4 mm at a penetration speed of 30 mm/s. The penetration position was at the geometric center of the lithium-ion battery's plane. The test was stopped after 3.5 min or when the surface temperature of the battery dropped to 50°C. A group of 10 lithium-ion batteries was tested, and the state of the lithium-ion batteries during the test was observed. A lithium-ion battery that did not ignite or explode was considered to have passed the test. Nail penetration pass rate = number of passes/10.

(8) Pass rate for hot box test:

10 lithium-ion batteries were taken for the hot box test. Each lithium-ion battery was charged at a constant current of 0.5C until the voltage reached 4.35 V, and then charged at a constant voltage of 4.35 V until the current reached 0.05C, bringing the lithium-ion battery to a fully charged state. The fully charged lithium-ion battery was placed in a test chamber, and the test chamber was heated at a speed of 5°C/min. When the chamber temperature reached (150 + 2)°C, the temperature was maintained for 60 min. A lithium-ion battery that did not ignite or explode was considered to have passed the test. Pass rate for hot box test = number of passes/10.

Table 1 shows the parameters and evaluation results for Examples 1 to 13 and Comparative Examples 1 and 2.

**Table 1**

| | Mixing mass ratio of first and second positive electrode active materials | Voltage at peak A | Voltage at peak B | $S_B/S_A$ | $S_2/S_1$ | $P_2/P_1$ | Discharge gram capacity (mAh/g) | Capacity retention rate after 500 cycles at 45°C | Nail penetration pass rate | Hot box pass rate at 150°C for 60 min |
|---|---|---|---|---|---|---|---|---|---|---|
| Example 1 | 1:1 | 4.08 | 4.19 | 0.83 | 0.97 | 2.82 | 212.8 | 82.30% | 100% | 100% |
| Example 2 | 1.1:1 | 4.08 | 4.20 | 0.85 | 0.75 | 2.31 | 211.3 | 81.50% | 100% | 100% |
| Example 3 | 1.3:1 | 4.07 | 4.19 | 0.89 | 0.65 | 1.78 | 209.0 | 80.40% | 100% | 100% |
| Example 4 | 1.5:1 | 4.08 | 4.19 | 0.95 | 0.56 | 1.21 | 205.6 | 78.10% | 100% | 100% |
| Example 5 | 1.2:1 | 4.07 | 4.20 | 0.88 | 0.72 | 1.85 | 210.1 | 80.90% | 100% | 100% |
| Example 6 | 1.4:1 | 4.06 | 4.18 | 0.91 | 0.54 | 1.47 | 207.0 | 79.80% | 100% | 100% |
| Example 7 | 1.45:1 | 4.06 | 4.17 | 0.92 | 0.59 | 1.43 | 207.1 | 79.00% | 100% | 100% |
| Example 8 | 1.35:1 | 4.05 | 4.16 | 0.89 | 0.63 | 1.82 | 209.3 | 80.60% | 100% | 100% |
| Example 9 | 1:1.3 | 4.08 | 4.19 | 0.79 | 0.98 | 3.65 | 213.8 | 82.20% | 100% | 100% |
| Example 10 | 1:1.4 | 4.07 | 4.20 | 0.73 | 1.28 | 5.1 | 214.3 | 84.10% | 80% | 70% |
| Example 11 | 1:1.35 | 4.08 | 4.19 | 0.76 | 1.01 | 4.85 | 214.1 | 83.50% | 80% | 80% |
| Example 12 | 1:1.45 | 4.07 | 4.19 | 0.65 | 1.37 | 5.79 | 215.0 | 84.10% | 60% | 60% |
| Example 13 | 1:1.5 | 4.06 | 4.16 | 0.52 | 1.41 | 6.31 | 215.2 | 85.50% | 60% | 50% |
| Comparative Example 1 | / | / | 4.20 | / | / | / | 202.2 | 76.40% | 100% | 100% |
| Comparative Example 2 | / | 4.08 | / | / | / | / | 215.8 | 80.9% | 30% | 30% |

By comparing Examples 1 to 13 and Comparative Example 2, it can be learned that as compared with Comparative Example 2 which does not use the first positive electrode active material, the lithium-ion batteries of Examples 1 to 13 show significantly improved nail penetration pass rate and hot box pass rate, which is beneficial to enhancing the safety performance of the lithium-ion batteries.

By comparing Examples 1 to 13 and Comparative Example 1, it can be learned that as compared with Comparative Example 1 which does not use the second positive electrode active material, the lithium-ion batteries of Examples 1 to 13 exhibit significantly improved discharge gram capacity and cycling capacity retention rate.

Additionally, by comparing Examples 1 to 13, it can be learned that when $0.5 \leq S_B/S_A \leq 0.85$ or $2.3 \leq P_2/P_1 \leq 6.5$, the lithium-ion batteries exhibit better cycling capacity retention rate, nail penetration pass rate, and hot box pass rate. In addition, when $0.75 \leq S_2/S_1 \leq 1.3$, the lithium-ion batteries show even better cycling capacity retention rate, nail penetration pass rate, and hot box pass rate.

The above are only preferred embodiments of the present application and are not intended to limit the protection scope of the present application. Any modifications, equivalent substitutions, improvements, and the like made within the spirit and principles of the present application are included in the protection scope of the present application.

## Claims

1. An electrochemical device, **characterized in that**, comprising a positive electrode plate, wherein the positive electrode plate comprises a positive electrode active material layer, the positive electrode active material layer comprises a first positive electrode active material and a second positive electrode active material, the first positive electrode active material contains element Ni and element Mn, and the second positive electrode active material contains element Ni and element Co; wherein
a relationship curve of a capacity-voltage differential dQ/dV with respect to voltage V during discharge of the electrochemical device comprises at least two peaks above 3.8 V.

2. The electrochemical device according to claim 1, **characterized in that**, the relationship curve of the capacity-voltage differential dQ/dV with respect to voltage V during discharge of the electrochemical device comprises a peak A and a peak B above 3.8 V, wherein a peak position of the peak A is in a range of 3.8 V to 4.1 V, a peak position of the peak B is in a range of 4.1 V to 4.3 V, a peak area of the peak A is $S_A$, and a peak area of the peak B is $S_B$, satisfying: $0.5 \leq S_B/S_A \leq 1$; preferably, $0.5 \leq S_B/S_A \leq 0.85$.

3. The electrochemical device according to claim 1, **characterized in that**, satisfying at least one of the following conditions:

   (1) the relationship curve of the capacity-voltage differential dQ/dV with respect to voltage V during discharge of the electrochemical device further comprises a peak C in a range of 3.5 V to 3.7 V; or
   (2) the relationship curve of the capacity-voltage differential dQ/dV with respect to voltage V during discharge of the electrochemical device comprises at least one peak above 4.1 V.

4. The electrochemical device according to claim 1, **characterized in that**, when the electrochemical device is in a fully discharged state, an X-ray diffraction characterization of the positive electrode plate has a diffraction peak 1 in a range of 43.7° to 44.1°, a peak intensity of the diffraction peak 1 being $P_1$, and has a diffraction peak 2 in a range of 44.2° to 44.6°, a peak intensity of the diffraction peak 2 being $P_2$, satisfying: $1 \leq P_1/P_1 \leq 6.5$.

5. The electrochemical device according to claim 4, **characterized in that**, $2.3 \leq P_2/P_1 \leq 6.5$.

6. The electrochemical device according to claim 1, **characterized in that**, the electrochemical device satisfies at least one of the following conditions:

   (1) the first positive electrode active material further contains element M1, the element M1 comprises at least one of Na or K, based on metal elements in the first positive electrode active material excluding element Li and the element M1, a molar percentage of the element Ni in the first positive electrode active material is a1, a molar percentage of the element Mn is b1, and a molar percentage of the element M1 is c1, satisfying: $30\% \leq a1 \leq 70\%$, $30\% \leq b1 \leq 70\%$, and $0.1\% \leq c1 \leq 15\%$;
   (2) the second positive electrode active material further contains element M2, the element M2 comprises at least one of Mn or Al, based on metal elements in the second positive electrode active material excluding element Li, a molar percentage of the element Ni in the second positive electrode active material is a2, a molar percentage of the element Co is b2, and a molar percentage of the element M2 is c2, satisfying: $80\% \le a2 \le 98\%$, $1\% \le b2 \le 19\%$, and $1\% \le c2 \le 19\%$;

(3) the first positive electrode active material comprises $Li_{x1}M1_mNi_{y1}Mn_{z1}R1_{q1}O_{2\pm n1}T1_{n1}$, wherein $0.6 \le x1 \le 1.2$, $0.001 \le m \le 0.15$, $0.3 \le y1 \le 0.7$, $0.3 \le z1 \le 0.7$, $0 \le q1 \le 0.2$, $0 \le n1 \le 0.2$, element M1 comprises at least one of Na or K, element R1 comprises at least one of Co, Ca, Sr, Y, Zr, Nb, Mo, In, Sn, Sb, Ba, La, Ce, Hf, Ta, W, Pb, Al, Mg, B, Si, P, S, Ti, V, Cr, Fe, Cu, Zn, Ga, or Ge, and element T1 comprises at least one of F, Cl, Br, I, or N; or

(4) the second positive electrode active material comprises $Li_{x2}Ni_{y2}Co_{z2}M2_pR2_{q2}O_{2\pm n2}T2_{n2}$, wherein $0.6 \le x2 \le 1.2$, $0.8 \le y2 \le 0.98$, $0.01 \le z2 \le 0.19$, $0.01 \le p \le 0.19$, $0 \le q2 \le 0.1$, $0 \le n2 \le 0.2$, element M2 comprises at least one of Mn or Al, element R2 comprises at least one of Ca, Sr, Y, Zr, Nb, Mo, In, Sn, Sb, Ba, La, Ce, Hf, Ta, W, Pb, Na, K, Mg, B, Si, P, S, Ti, V, Cr, Fe, Cu, Zn, Ga, or Ge, and element T2 comprises at least one of F, Cl, Br, I, or N.

7. The electrochemical device according to claim 1, **characterized in that**, the electrochemical device satisfies at least one of the following conditions:

(1) the first positive electrode active material is secondary particles formed by aggregation of primary particles;
(2) an average diameter of the first positive electrode active material is 6 $\mu$m to 14 $\mu$m;
(3) the second positive electrode active material is primary particles; or
(4) an average diameter of the second positive electrode active material is 3 $\mu$m to 10 $\mu$m.

8. The electrochemical device according to claim 1, **characterized in that**, in a cross-section along a thickness direction of the positive electrode active material layer, in a 127 $\mu$m $\times$ 34 $\mu$m region, an area of the first positive electrode active material is $S_1$, and an area of the second positive electrode active material is $S_2$, satisfying: $0.5 \le S_2/S_1 \le 1.5$.

9. The electrochemical device according to claim 8, **characterized in that**, $0.75 \le S_2/S_1 \le 1.3$.

10. An electronic device, comprising the electrochemical device according to any one of claims 1 to 9.

FIG. 1

FIG. 2

FIG. 3

FIG. 4

## INTERNATIONAL SEARCH REPORT

| International application No. |
| --- |
| **PCT/CN2023/125571** |

| | |
| --- | --- |
| **A.** | **CLASSIFICATION OF SUBJECT MATTER** |
| | H01M 4/36(2006.01)i; H01M4/505(2010.01)i; H01M4/525(2010.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC: H01M 4/-

Documentation searched other than minimum documentation to the extent that such documents are included in the fields searched

Electronic data base consulted during the international search (name of data base and, where practicable, search terms used)

CNTXT, ENTXTC, CNKI, ISI_WEB OF SCIENCE: 正极, NI, 镍, 锰, MN, 钴, CO, 容量, 电压, 微分, DQ/DV, 放电, positive, electrode, nickel, Manganese, Cobalt, capacity, voltage, discharge, differential

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2022037814 A (SUMITOMO METAL MINING CO., LTD.) 09 March 2022 (2022-03-09) description, embodiment 1, and paragraphs [0008], [0074], and [0076] | 1-10 |
| A | JP 2013129589 A (TANAKA CHEMICAL CORP.) 04 July 2013 (2013-07-04) description, embodiment 1 | 1-10 |
| A | US 2017125801 A1 (SAMSUNG ELECTRONICS CO., LTD. et al.) 04 May 2017 (2017-05-04) description, embodiment 1 | 1-10 |
| A | CN 113871609 A (SAMSUNG SDI CO., LTD.) 31 December 2021 (2021-12-31) description, embodiment 1 | 1-10 |
| A | CN 105280893 A (SAMSUNG ELECTRONICS CO., LTD.) 27 January 2016 (2016-01-27) description, embodiment 1 | 1-10 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 June 2024** | **26 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/125571**

| Patent document cited in search report | | | Publication date (day/month/year) | Patent family member(s) | | | Publication date (day/month/year) |
|---|---|---|---|---|---|---|---|
| JP | 2022037814 | A | 09 March 2022 | None | | | |
| JP | 2013129589 | A | 04 July 2013 | None | | | |
| US | 2017125801 | A1 | 04 May 2017 | US | 10862106 | B2 | 08 December 2020 |
| | | | | US | 2021043925 | A1 | 11 February 2021 |
| | | | | US | 11764352 | B2 | 19 September 2023 |
| CN | 113871609 | A | 31 December 2021 | JP | 2023104990 | A | 28 July 2023 |
| | | | | JP | 2022013822 | A | 18 January 2022 |
| | | | | KR | 20220002173 | A | 06 January 2022 |
| | | | | KR | 102436422 | B1 | 25 August 2022 |
| | | | | US | 2021408528 | A1 | 30 December 2021 |
| | | | | EP | 3932872 | A2 | 05 January 2022 |
| | | | | EP | 3932872 | A3 | 26 January 2022 |
| | | | | KR | 20220001953 | A | 06 January 2022 |
| | | | | KR | 102392379 | B1 | 29 April 2022 |
| CN | 105280893 | A | 27 January 2016 | EP | 2975678 | A1 | 20 January 2016 |
| | | | | EP | 2975678 | B1 | 27 December 2017 |
| | | | | US | 2016020458 | A1 | 21 January 2016 |
| | | | | US | 10044030 | B2 | 07 August 2018 |

Form PCT/ISA/210 (patent family annex) (July 2022)